# DEMANDE DE BREVET EUROPEEN

(11) **EP 3 418 519 A1**
(43) Date de publication de la demande: **26.12.2018**
(21) Numéro de dépôt: 18305595.3
(22) Date de dépôt: 15.05.2018
(51) Int. Cl.: F01N 3/20, F01N 3/28, F01N 13/14, F28D 20/02, B01D 53/94

(54) **SYSTEME D'OPTIMISATION DE LA TEMPERATURE DE CATALYSEURS A REDUCTION CATALYTIQUE SELECTIVE SCR**

(30) Priorité: 19.06.2017 FR 1755488
(71) Demandeur: IFP Energies nouvelles, 92852 Rueil-Malmaison Cedex (FR)
(72) Inventeur: LE BERR, Fabrice, 92500 RUEIL MALMAISON (FR)
(74) Mandataire: IFP Energies nouvelles

(57) **Abrégé**

La présente invention concerne un système catalytique SCR (« Selective Catalytic Réduction ») de traitement de gaz d'échappement de moteur à combustion comportant un milieu catalysé (1) traversé par les gaz d'échappement et isolé thermiquement par une couche extérieure de matériau isolant (3), caractérisé en ce qu'il comporte au moins un insert cylindrique (4 ; 5 ; 6) sensiblement au centre dudit milieu et constitué de matériau à changement de phase (MCP).

## Description

La présente invention se situe dans le domaine des systèmes de traitement des gaz d'échappement de moteur à combustion interne, notamment pour véhicule.

Elle est proposée pour les dispositifs à catalyse à réduction catalytique sélective SCR (pour « Selective Catalytic Réduction») permettant une réduction des émissions de NOx en sortie du moteur thermique.

Plus précisément, l'invention propose des solutions pour contrôler la température interne des dispositifs catalytiques SCR afin d'en améliorer leurs performances globales.

Les normes antipollution (en véhicule léger et poids lourd) imposent des émissions de gaz en sortie des systèmes de post-traitement des gaz d'échappement très faibles (de l'ordre de 0,4 g/kW/h pour les émissions de NOx en poids-lourd pour la norme Euro 6).

Pour cela, les solutions de catalyse à l'échappement proposées nécessitent des efficacités de conversion du système SCR très élevées (supérieures à 95%) qui est actuellement un challenge compte-tenu notamment de la gamme de température à laquelle est soumise le système catalytique.

Ainsi, les températures des gaz d'échappement qui traversent le support catalytique pendant le cycle de normalisation sont parfois très défavorables, avec des valeurs de températures faibles ne permettant pas la conversion des NOx, ou très élevées, ce qui oxyde le réducteur (généralement du nitrate d'ammonium, NH3) et empêche le stockage de ce réducteur afin d'optimiser la conversion (phénomène dit de « relargage » ou « NH3 slip »).

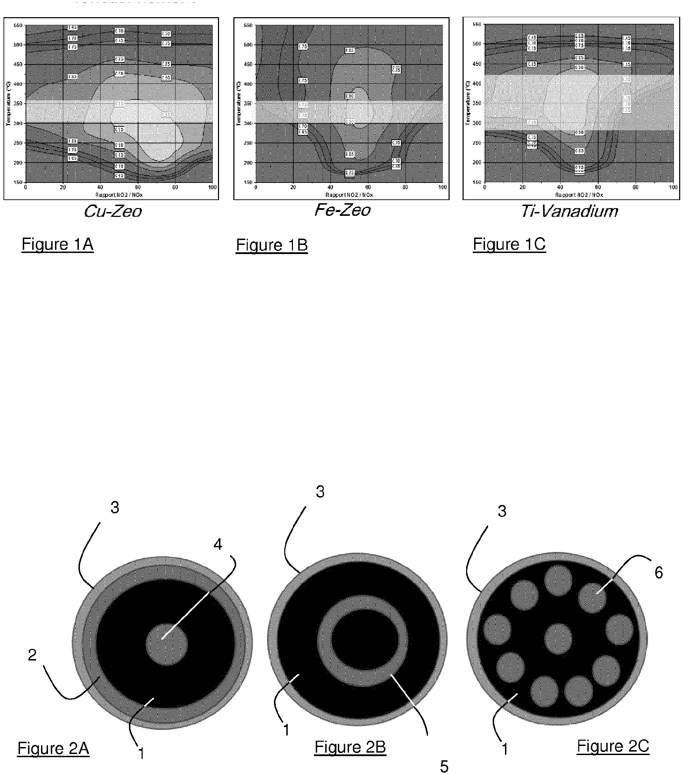

On sait que la zone de conversion optimale, notamment en système SCR, est généralement très limitée en plage de température comme le montrent les figures 1A, 1B, et 1C respectivement sur de trois catalyseurs différents : Cu-Zeo, Fe-Zeo, et Ti-Vanadium. On constate que pour les deux premiers, la fenêtre optimale est considérée comme pouvant être comprise entre 300/350°C. Pour Ti-Vanadium, la fenêtre est plus large entre 280/420°C environ.

Pour atteindre les efficacités de conversion demandées par les futures normes, il est donc nécessaire d'essayer de maintenir la température du système catalytique dans une plage restreinte déterminée.

Aucun dispositif à base de matériaux à changement de phase n'a été proposé pour résoudre le problème pour une application « SCR » visant à contrôler la plage de température de fonctionnement afin d'optimiser la conversion et mieux gérer le stockage du NH3 au sein du catalyseur.

L'objet de la présente invention est de proposer l'utilisation d'un matériau à changement de phase (MCP) dont la température de changement de phase est choisie de manière à stocker l'énergie et la restituer dans la zone de température optimale de fonctionnement du catalyseur.

Ainsi, la présente invention concerne un système catalytique à réduction catalytique sélective (SCR) de traitement de gaz d'échappement de moteur à combustion comportant un milieu catalysé traversé par les gaz d'échappement et isolé thermiquement par une couche extérieure de matériau isolant, caractérisé en ce qu'il comporte au moins un insert cylindrique sensiblement au centre dudit milieu et constitué de matériau à changement de phase.

Le milieu catalysé peut comporter sur son extérieur une couche de matériau à changement de phase.

L'insert cylindrique peut être tubulaire.

Le milieu catalysé peut comporter une série de cylindre de matériau à changement de phase répartie régulièrement.

L'invention peut trouver son utilisation pour des dispositifs à catalyse de véhicule hybride.

L'invention peut également trouver son utilisation pour des dispositifs à catalyse de véhicule hybride rechargeable.

La présente invention sera mieux comprise et ses avantages apparaîtront plus clairement à la lecture des mises en oeuvre, nullement limitatives, illustrées par les figures ci-après annexées parmi lesquelles :
- les figures 1A, 1B, 1C illustrent les plages de fonctionnement pour trois catalyseurs,
- les figures 2A, 2B, 2C illustrent des modes de réalisation selon l'invention.

Les figures 1A, 1B, 1C ont déjà été commentées ci-dessus pour démontrer l'avantage de la présente invention.

La présente invention a donc pour objectif de restreindre la fenêtre de température du système SCR afin d'optimiser son fonctionnement en limitant les écarts de température par rapport à la température optimale de conversion catalytique de façon à augmenter la durée d'utilisation du catalyseur dans la zone d'efficacité maximale du catalyseur et d'augmenter globalement son efficacité.

Ainsi, le système permet :
- de rapprocher les efficacités moyennes de fonctionnement au plus proche de l'efficacité maximale du support catalytique,
- de limiter les excursions dans les zones de faibles températures et donc de faibles efficacités,
- de limiter l'oxydation du réducteur (NH3) lors des excursions dans les fortes températures,
- de faciliter la gestion du stockage du réducteur (NH3) au sein du catalyseur, car les augmentations brutales de température ont des effets négatifs sur le relargage du NH3 stocké (« NH3 slip »),
- d'optimiser la durée de vie du catalyseur en écrêtant les pics de température extrêmes, provenant d'une utilisation soutenue du moteur thermique, ou d'une régénération de filtre à particules placé en amont du système SCR.

Le présent système est basé sur l'intégration d'un matériau à changement de phase (MCP) au sein du système à réduction catalytique sélective (SCR), ou équivalent. Ce MCP est choisi pour avoir une température de changement d'état optimale par rapport à la plage de température d'efficacité maximale du système SCR.

Il est recommandé de choisir un MCP dont la température de changement d'état est proche de la température de fonctionnement optimale du catalyseur, de façon à maximiser la durée d'utilisation autour de cette température.

Pour régler le fonctionnement du matériau à changement de phase, il peut être constitué de mélange de matériaux différents.

Diverses implantations peuvent être envisagées selon les figures 2A, 2B, 2C qui montrent en coupe d'un système de traitement des gaz d'échappement par catalyse, le trajet des gaz étant selon l'axe qui passe par le centre de la coupe circulaire.

La figure 2A montre le pain catalysé 1 entouré par une première couche de matériau à changement de phase 2, l'ensemble étant isolé thermiquement par une épaisseur d'isolant thermique 3. Dans cette variante, le pain de catalyse contient en son centre un insert 4 de MCP. La température du pain catalysé 2 est ainsi contrôlée par son centre et sa peau extérieure par le moyen du matériau à changement de phase qui a la capacité d'absorber et de restituer de l'énergie thermique locale fournie par les gaz et la conversion catalytique.

La variante selon la figure 2B montre que l'on dispose uniquement un insert cylindrique creux 5 de MCP au sein du pain catalysé.

La variante selon la figure 2C montre le matériau MCP réparti dans le pain catalytique, dans une section orthogonale à la direction longitudinale du pain catalytique, selon deux directions orthogonales dans cette section, sous forme d'une série de barreaux pleins cylindriques 6. La répartition du matériau MCP peut par exemple se faire selon une direction radiale et selon une direction circonférentielle. Le nombre et la dimension des barreaux sont choisis en fonction de la taille du système catalytique et les conditions de fonctionnement. Leur disposition dans le milieu catalytique suit une règle de répartition régulière optimale pour atteindre l'objectif de contrôle de la température dudit milieu.

Pour chaque variante, le matériau à changement de phase peut être réparti sur tout ou partie de la longueur du pain, de façon à pouvoir notamment optimiser la durée des phases d'activation.

Les différentes variantes proposées présentent des avantages différents suivant leur utilisation lors d'un démarrage à froid ou en fonctionnement à chaud.

Avantageusement, ce type de système est également intéressant pour les applications de véhicules hybrides, notamment rechargeables, car il permet d'éviter le désamorçage de la conversion après l'arrêt prolongé du moteur.

## Revendications

1. Système catalytique à réduction catalytique sélective (SCR) de traitement de gaz d'échappement de moteur à combustion interne comportant un milieu catalysé (1) traversé par les gaz d'échappement et isolé thermiquement par une couche extérieure de matériau isolant (3), **caractérisé en ce qu'**il comporte au moins un insert cylindrique (4 ; 5 ; 6) sensiblement au centre dudit milieu et constitué de matériau à changement de phase (MCP).

2. Système catalytique à réduction catalytique sélective selon la revendication 1, dans lequel le milieu catalysé comporte sur son extérieur une couche (2) de matériau à changement de phase (MCP).

3. Système catalytique à réduction catalytique sélective selon l'une des revendications 1 ou 2, dans lequel ledit insert cylindrique est tubulaire (5).

4. Système catalytique à réduction catalytique sélective selon l'une des revendications précédentes, dans lequel le milieu catalysé comporte une série de cylindre de matériau à changement de phase (MCP) répartie régulièrement, dans une section orthogonale à la direction longitudinale du milieu catalysé.

5. Utilisation du système catalytique à réduction catalytique sélective selon l'une des revendications 1 à 5, pour des dispositifs à catalyse de véhicule hybride.

6. Utilisation du système catalytique à réduction catalytique sélective selon la revendication 5, pour des dispositifs à catalyse de véhicule hybride rechargeable.
